# FASCICULE DE BREVET EUROPEEN

(11) **EP 1 109 959 B1**
(45) Date de publication et mention de la délivrance du brevet: **13.10.2004**
(21) Numéro de dépôt: 99940256.3
(22) Date de dépôt: 30.08.1999
(51) Int. Cl.: D04H 1/58

(54) **PROCEDE DE FABRICATION D'UN PRODUIT ISOLANT FIBREUX, PRODUIT ET COMPOSITION D'ENCOLLAGE**
VERFAHREN ZUR HERSTELLUNG EINES FASERHALTIGEN ISOLATIONSGEGENSTANDES, GEGENSTÄNDE UND SCHLICHTEZUSAMMENSETZUNG
METHOD FOR MAKING A FIBROUS INSULATING PRODUCT, SIZING STUFF AND COMPOSITION

(30) Priorité: 01.09.1998 FR 9810923
(43) Date de publication de la demande: 27.06.2001
(73) Titulaire: SAINT-GOBAIN ISOVER, 92400 Courbevoie (FR)
(72) Inventeur: JOACHIM, Jacky, F-60270 Gouvieux (FR); ESPIARD, Philippe, F-60270 Gouvieux (FR); MAHIEUXE, Bruno, F-60600 Clermont (FR); GILBERT, Roger, F-60290 Rantigny (FR); HOLSTEIN, Wolfgang, D-35315 Homberg (DE); AMANNT, Gérald, D-69259 Wilhelmsfeld (DE)
(74) Mandataire: Cardin, Elise
(86) Numéro de dépôt international: PCT/FR1999/002068
(87) Numéro de publication internationale: WO 2000/012803

(56) Documents cités:
- EP-A- 0 818 425
- WO-A-97/21636
- WO-A-98/05604
- GB-A- 1 416 148
- US-A- 5 324 337
- CHEMICAL ABSTRACTS, vol. 90, no. 24, 11 juin 1979 (1979-06-11) Columbus, Ohio, US; abstract no. 191590, XP002117379 -& PL 87 483 B (CENTRALNY OSRODEK BADAWCZO-ROZWOJOWY PRZEMYSLU IZOLACJI BUDOWLANEJ) 30 décembre 1978 (1978-12-30)

## Description

La présente invention se rapporte aux techniques de fabrication de produits isolants, notamment thermiques et/ou acoustiques, à base de laine minérale. Elle concerne plus particulièrement l'amélioration de l'encollage de la laine constituant un tel produit, de façon à améliorer la résistance mécanique après vieillissement de ce dernier, en particulier en milieu humide.

Ces produits, qui peuvent être à base de laine de verre ou de roche, se présentent usuellement sous la forme de feutres enroulés, de panneaux plus ou moins rigides, de coquilles ou encore de voiles.

La fabrication de ces produits isolants comprend les étapes suivantes :
- on fait fondre dans un four adapté la composition minérale de verre ou de roche,
- on amène la matière minérale fondue jusqu'à un dispositif de fibrage,
- la matière fondue est transformée en filaments, notamment par la technique connue d'étirage centrifuge sur rotors ou dans des assiettes percées, les filaments étant généralement étirés sous l'effet d'un courant gazeux,
- on pulvérise sur la laine ainsi formée une composition d'encollage contenant une résine thermodurcissable,
- on collecte la laine encollée sur un organe de réception sous la forme d'une nappe,
- on soumet la nappe à un traitement thermique visant à durcir la résine et l'on met la nappe à la forme voulue.

Les propriétés désirées pour le produit final dépendent de chaque application particulière, mais l'on cherche généralement à obtenir en plus des propriétés isolantes du produit, un certain nombre de caractéristiques mécaniques, telles que stabilité dimensionnelle, résistance au poinçonnement, à l'arrachement, à la traction, à la compression.

S'il est important que ces propriétés soient bonnes après la fabrication du produit jusqu'à son utilisation pour assurer de bonnes conditions de mise en place sur le chantier, il est également souhaitable que ces propriétés restent bonnes pendant un certain temps une fois le produit en place, pour garantir une durée de vie suffisante du produit.

Malheureusement, il arrive parfois qu'on observe une perte de propriétés mécaniques de ces produits après vieillissement, en particulier lorsqu'ils ont été exposés à l'humidité, notamment dans des conditions de condensation atmosphérique élevée, par exemples pour les produits équipant les toitures et qui subissent des cycles thermiques importants.

On doit par exemple également prendre garde à éviter de telles pertes lorsque la composition de la laine minérale est particulièrement sensible à l'eau, par exemple lorsqu'il s'agit d'une laine minérale susceptible de se dissoudre en milieu physiologique.

Le document WO-A-97/21636 propose d'améliorer la résistance au vieillissement en présence d'humidité atmosphérique de fibres minérales artificielles du type soluble en milieu physiologique (solubilité d'au moins 20 nm/jour à pH 7,5 à 37°C) en formant sur les fibres un revêtement comprenant un sel (hydrogéno)phosphate d'ammonium ou d'ammonium quaternaire ou de métal alcalin, de préférence d'hydrogénophosphate de diammonium ou de dihydrogénophosphate d'ammonium.

La résistance au vieillissement en milieu humide est estimée dans ce document, en déduisant à partir de mesures de pH le taux de dissolution des fibres dans des tests d'immersion simulant un vieillissement accéléré dans des conditions normales d'utilisation. La mesure de pH est éventuellement complétée par une observation au microscope de l'érosion des fibres.

Toutefois, ce traitement se révèle insuffisant pour ce qui est de préserver les propriétés mécaniques du produit après exposition au milieu humide : en pratiquant des essais de résistance mécanique sur ces produits à base de laine minérale après vieillissement accéléré en milieu humide, les présents inventeurs ont observé que des agents cationiques usuels à base d'ammonium ne permettaient pas de limiter les pertes de propriétés mécaniques après exposition au milieu humide et qu'un phosphate tel que le diammonium hydrogénophosphate avait même un effet négatif sur les propriétés mécaniques après vieillissement en milieu humide, en ce sens que les pertes de propriétés étaient amplifiées.

L'invention a pour but d'obvier à ces inconvénients et d'améliorer la résistance mécanique après vieillissement, en particulier en milieu humide, de produits d'isolation à base de laine minérale, ou autrement dit de permettre de réduire les pertes de propriétés mécaniques de ces produits après vieillissement, en particulier en milieu humide.

Ce but, ainsi que d'autres qui apparaîtront par la suite, a été atteint selon l'invention en ajoutant un latex à l'encollage lors de la fabrication des produits.

A cet égard, l'invention a pour objet un procédé pour améliorer la résistance mécanique après vieillissement, en particulier en milieu humide, d'un produit isolant, notamment thermique et/ou acoustique, à base de laine minérale pourvue d'un encollage comprenant une résine thermodurcissable, notamment une résine phénolique, procédé dans lequel on ajoute un latex à l'encollage lors de la fabrication du produit.

De façon tout à fait surprenante, on a pu constater que si, dans bien des cas, l'ajout d'un latex à l'encollage ne modifiait pas ou peu les propriétés mécaniques, voire dégradait ces propriétés juste après fabrication, on pouvait réduire de façon remarquable les pertes de propriétés après vieillissement, en particulier en milieu humide, par rapport à un produit similaire ne contenant pas le latex (produit standard) et atteindre un niveau de performance final après vieillissement supérieur au produit standard.

On observe avantageusement cet effet sur des produits à base de laine minérale susceptible de se dissoudre en milieu physiologique (laine dite « biosoluble ») qui sont des produits d'ordinaire assez sensibles à l'humidité, en raison de l'assez forte teneur en oxydes alcalins du matériau minéral, souvent combinée à une teneur importante en oxyde de bore.

Dans la présente demande, on entend par latex, de la façon usuelle, une émulsion ou dispersion aqueuse d'une ou plusieurs substances polymères naturelles ou synthétiques, généralement thermoplastiques. Le ou les polymères peuvent être auto-émulsifiables, ou bien dans le cas contraire, l'émulsion ou la dispersion est stabilisée par des agents tensioactifs appropriés.

Se sont révélés avantageux en vue de la résistance mécanique après exposition au milieu humide, des latex à base d'une émulsion ou dispersion d'une phase polymère porteuse de fonctions hydrophiles formant l'interface avec la phase aqueuse. Ces fonctions sont notamment des fonctions hydroxyle -OH, carboxyle -COOH ou ester -COOR où R désigne un groupement alkyle pouvant notamment compter de 1 à 5 atomes de carbone. Les fonctions ester sont particulièrement préférées, notamment la fonction acétate.

Ce résultat est tout à fait surprenant car on aurait pu croire qu'un latex hydrophile, en augmentant la quantité d'eau captée par le produit, accélèrerait la perte de propriétés due au milieu humide, en particulier de produits à base d'une laine minérale dite biosoluble.

Sans vouloir être lié par une quelconque théorie scientifique, il est possible que le caractère hydrophile de la phase polymère dispersée du latex, procure à ce dernier une affinité avantageuse envers le matériau minéral formant la laine, éventuellement grâce à la formation de liaisons polaires, faisant en quelque sorte jouer au latex un rôle de primaire d'adhérence pour la résine. On a en effet constaté dans des essais comparatifs de résistance à l'arrachement de la résine, que l'application préalable d'un latex hydrophile sur la laine minérale procure une adhésion renforcée de la résine de l'encollage à la surface du matériau minéral.

En tout état de cause, l'application d'un latex hydrophile avec l'encollage lors de la fabrication du produit isolant, conduit à des produits supportant le vieillissement en milieu humide avec des pertes réduites de propriétés mécaniques.

Dans une variante préférée, le polymère lui-même est porteur de fonctions hydrophiles. Les polymères dans lesquels chaque monomère est porteur d'au moins une fonction hydrophile se révèlent avantageux à cet égard, qu'il s'agisse d'homopolymères dérivés d'un seul monomère ou de copolymères dérivés d'au moins deux monomères différents. On peut néanmoins tolérer la présence d'un comonomère minoritaire ne portant pas de fonction hydrophile.

Avantageusement, le latex renferme un polymère ou copolymère de type vinylique, de type acrylique et/ou dérivé d'acide carboxylique.

On préfère tout particulièrement les latex de type vinylique, en particulier à fonctions ester pendantes, notamment à base d'acétate de vinyle. On préfère tout spécialement les latex à base d'homopolymère de polyacétate de vinyle, mais on peut aussi citer comme latex avantageux, ceux à base de copolymère d'acétate de vinyle et notamment d'acide et/ou ester (méth)acrylique, d'ester maléïque, d'oléfine et/ou de chlorure de vinyle.

Le cas échéant les latex vinyliques utilisables selon l'invention peuvent renfermer les additifs usuels, tels que des plastifiants, notamment les plastifiants appartenant à la famille de esters en particulier phtalates, par exemple le n-butylphtalate. Les latex, plastifiés ou non, peuvent éventuellement être modifiés par des complexants, tels que des hydroxydes d'aluminium, ou d'autres éléments présentant une/des vacances électroniques et susceptibles de former des complexes tels que notamment le bore, le zinc, le titane, le zirconium, et/ou l'étain.

D'autres latex intéressants peuvent être choisis parmi ceux renfermant un polymère de type acrylique, notamment un copolymère acrylonitrile/ester acrylique, ou styrène/acide ou ester acrylique silanisé ( c'est-à-dire copolymérisé avec un monomère à insaturation éthylénique porteur d'au moins une fonction silane ou silanol ).

Dans certains cas, notamment lorsque la teneur en fonctions hydrophiles du polymère est relativement faible, le polymère peut ne pas avoir par lui-même un caractère suffisamment hydrophile pour être stable en émulsion et/ou pour avoir une affinité adaptée pour le verre. Alors, le latex est avantageusement tel que la phase dispersée soit constituée d'un polymère entouré d'un colloïde protecteur à fonctions hydrophiles (l'ensemble formant une micro ou nanoparticule dispersée), ce colloïde apportant les fonctions hydrophiles souhaitées en surface de la particule en suspension, c'est-à-dire à l'interface avec la phase aqueuse.

Le colloïde est en général constitué d'une ou plusieurs macromolécules ; il peut avantageusement être à base d'alcool polyvinylique ou encore de cellulose.

Se sont ainsi révélés particulièrement avantageux pour la réduction des pertes de propriétés mécaniques après vieillissement, des latex à base de polymère de type vinylique avec colloïde protecteur. On peut citer par exemple ceux à base de copolymère de chlorure de vinyle et d'oléfine, silanisé ou non, notamment un copolymère chlorure de vinyle/éthylène ou plus préférentiellement un terpolymère chlorure de vinyle/laurate de vinyle/éthylène.

En variante, la phase dispersée peut être constituée dudit polymère entouré de tensioactif, la molécule tensioactive présentant une première extrémité capable de s'adsorber à la surface de la phase polymère et une seconde extrémité hydrophile, grâce à des fonctions adaptées, lesdites fonctions se regroupant pour former la surface de la particule en dispersion. Le tensioactif peut être choisi de façon connue en soi parmi les molécules capables de mettre ledit polymère en dispersion ou émulsion aqueuse.

On parvient, avec les latex porteurs de groupes hydrophiles précités, à améliorer de manière notable les performances après vieillissement des produits isolants selon l'invention en ce qui concerne de nombreuses propriétés mécaniques, notamment la résistance au poinçonnement ou à la compression.

Cependant, l'introduction de matière très hydrophile dans le produit isolant peut augmenter de manière indésirable la quantité d'eau susceptible d'être emmagasinée dans le produit, notamment au stockage en atmosphère humide. Dans ce cas, on peut remédier à cet inconvénient en ajoutant au latex un agent hydrofugeant, tel que silicone ou composés fluorés, tout en maintenant d'excellentes propriétés mécaniques après vieillissement.

Dans une réalisation particulière, on a constaté qu'un latex vinylique plastifié modifié avec un hydroxyde, par exemple un latex homo- ou copolymère à base d'acétate de vinyle plastifié par un phtalate et modifié avec un hydroxyde d'aluminium, ne donnait pas lieu à une reprise d'eau indésirable par le produit isolant.

Un latex utile selon le procédé de l'invention a avantageusement une température de transition vitreuse T_{g} inférieure à 100°C, en particulier 80°C, notamment à 50°C. Ainsi, on pense pouvoir s'assurer que le polymère en dispersion dans le latex atteint une plasticité suffisante au contact des filaments de laine minérale au moment de la pulvérisation de l'encollage et/ou lors du passage en étuve pour être fixé sur la laine minérale d'une manière compatible avec la résine de l'encollage. Du fait que la température minimale de filmification Tₘ est en général inférieure à la température de transition vitreuse, il serait également possible que ces latex forment sur la laine un revêtement protecteur plus ou moins régulier ou continu, qui préserverait le matériau de l'attaque de l'humidité.

Les latex ayant une température de transition vitreuse T_{g} très supérieure à 80°C ne sont en général pas préférés car ils forment des dépôts très rigides, voire cassants, qui ne sont pas bénéfiques pour les propriétés mécaniques recherchées.

D'autre part, la température de transition vitreuse T_{g} du latex est avantageusement de l'ordre d'au moins -10°C, de préférence d'au moins -5°C, en particulier d'au moins 0°C, notamment au moins 5°C. Les latex ayant une température de transition vitreuse T_{g} inférieure à de l'ordre de -10°C à -5°C forment des dépôts qui à l'état sec sont très mous, et même collants, et qui de par leur manque de résistance n'ont pas d'effet très significatif sur les propriétés mécaniques après vieillissement en milieu humide.

Il n'est pas nécessaire que la proportion de latex ajoutée soit très importante pour atteindre un niveau satisfaisant d'amélioration de la résistance mécanique des produits. De manière générale, la part pondérale du latex introduit peut être avantageusement choisie inférieure à 5% de matière sèche par rapport au poids de la laine minérale, le latex étant déjà efficace à une teneur aussi faible que 0,01%. En particulier, la part pondérale du latex introduit peut être de l'ordre de 0,1 à 5%, notamment de l'ordre de 0,5 à 5% de matière sèche par rapport au poids de la laine minérale, mais on obtient souvent un résultat satisfaisant avec une proportion de latex de l'ordre de 0,1 à 2%, voire de l'ordre de 0,1 à 1%, notamment de l'ordre de 0,5 à 1% de matière sèche par rapport au poids de la laine minérale.

En ce qui concerne le mode d'introduction du latex, on peut mentionner les variantes de réalisation suivantes.

Dans une première forme de réalisation, on mélange le latex avec les constituants de l'encollage lors de la formulation de ce dernier, puis on applique cette composition d'encollage modifiée, de la manière usuelle sur la laine minérale. Cette forme de réalisation est avantageuse lorsque le latex est compatible avec les constituants de l'encollage, c'est-à-dire que le mélange ne provoque pas de séparation de phase ou de précipitation de solides.

A cet égard, l'invention a encore pour objet une composition d'encollage pour produit isolant, notamment thermique et/ou acoustique, comprenant une résine thermodurcissable et un latex.

La formulation de base de l'encollage peut être la suivante :
- résine thermodurcissable, en particulier du type phénol-formol
   50 à 90 parties en poids de solides
   notamment 50 à 70
- urée
   50 à 10 parties en poids
   notamment 50 à 30
   avec un total résine + urée = 100 parties en poids sec
- sulfate d'ammonium
   0 à 5 parties en poids
   notamment 1 à 3
- ammoniaque 0 à 10 parties en poids (sur la base de NH₃)
   notamment 2 à 10
- silane 0 à 2 parties en poids
- huile minérale 0 à 20 parties en poids

Dans une deuxième forme de réalisation, applicable même lorsque le latex n'est pas compatible en mélange avec les constituants de l'encollage, on applique le latex séparément de l'encollage sur la laine minérale. Par exemple, on peut pulvériser le latex en phase aqueuse à proximité de la couronne de pulvérisation de l'encollage, notamment en disposant deux couronnes de pulvérisation superposées sur le trajet de la laine minérale en direction de l'organe de réception, une couronne (de préférence la première dans le sens de progression de la laine) étant destinée au latex et l'autre couronne étant destinée à l'encollage.

Dans les deux formes de réalisation, le total des matières apportées sur la laine minérale par l'encollage et le latex représente en général de l'ordre 5 à 15%, notamment 7 à 10% en poids de matières sèches par rapport au poids de laine minérale.

La laine minérale ainsi encollée étant ensuite traitée en étuve en vue de la polymérisation de la résine de l'encollage, il convient de veiller à ce que les conditions du traitement thermique en étuve (température, temps de séjour) n'affectent pas la stabilité du latex. En règle générale, les conditions classiques de fabrication sont tout à fait compatibles avec l'utilisation de latex selon l'invention.

L'invention s'applique à des produits d'isolation à base de tous types de laine minérale, aussi bien laine de verre que laine de roche. Elle trouve une application particulièrement intéressante lorsque le produit est constitué de laine de verre ou de roche susceptible de se dissoudre en milieu physiologique. Des exemples de tels matériaux sont décrits notamment dans EP-A-0 412 878, WO-A-95 31 411, WO-A-95 32 927, WO-A-93 22 251, EP-A-0 459 897, WO-A-96 04 213, WO-A-95 31 410.

Ces matériaux présentent en général une vitesse de dissolution en solution saline simulant un milieu physiologique, d'au moins 30, notamment au moins 40 ou 50 ng/cm² par heure, mesurée à pH 4,5, et d'au moins 30, notamment au moins 40 ou 50 ng/cm² par heure, mesurée à pH 7,5.

Parmi les paramètres influençant la sensibilité à l'eau de ces matériaux, on peut citer leur assez forte teneur en oxydes alcalins, qui peut être de l'ordre de 8 à 25 %, notamment 14 à 20 % en poids dans des compositions de verre préférées.

A cela s'ajoute une teneur en oxyde de bore en général de l'ordre de 2 à 18 %, en particulier au moins 4 %, voire au moins 7 %, notamment de 4 à 13 % en poids, ou encore de 7 à 15 %.

En particulier, la teneur en oxyde de sodium Na₂O peut être supérieure ou égale à 16 % en poids, par exemple de l'ordre de 16,5 à 19 % en poids, avec une teneur en oxyde de potassium de l'ordre de 0,2 à 0,5 % en poids.

Dans un exemple particulier, selon EP-A-412 878, la composition est la suivante :
- SiO₂ 57 à 70 %
- Al₂O₃ 0 à 5 %
- CaO 5 à 10%
- MgO 0 à 5%
- Na₂O + K₂O 13 à 18 %
- B₂O₃ 2 à 12 %,
   notamment 7 à 12 %
- F 0 à 1,5 %
- P₂O₅ 0 à 4 %
- impuretés < 2 %

Dans un autre exemple particulier, selon WO-A-95 32 27, la composition est la suivante :
- SiO₂ 45 à 60 %
- Al₂O₃ < 2 %
- CaO + MgO 10 à 16 %
- Na₂O + K₂O 15 à 23 %
- B₂O₃ 10 à 18 %
- P₂O₅ 0 à 4 %
- BaO 0 à 1 %
- impuretés 0 à 2 %

A cet égard, l'invention a également pour objet un produit d'isolation, notamment thermique et/ou acoustique, à base de laine minérale pourvue d'un encollage à base de résine thermodurcissable, notamment une résine phénolique, dans lequel l'encollage renferme un latex qui améliore la résistance mécanique du produit après vieillissement, en particulier en milieu humide, ce produit pouvant présenter l'une quelconque des caractéristiques ci-dessus.

De manière générale, un produit d'isolation amélioré selon l'invention peut avoir les caractéristiques usuelles de densité, cette dernière étant en général d'au moins 30 kg/m³. Dans un mode de réalisation préféré, le produit d'isolation a une densité d'au moins 50 kg/m³, notamment d'au moins 80 kg/m³. Ces produits, qualifiés de lourds, sont principalement utilisés dans des applications sous toiture et sont particulièrement exposés à l'humidité en raison des cycles thermiques et de la condensation atmosphérique. Selon l'invention, ils conservent un bon niveau de résistance mécaniques après vieillissement dans ces conditions. L'invention s'applique néanmoins de la même manière à tous types de produits, dont la densité est généralement d'au moins 10 kg/m³.

L'invention a enfin pour objet l'utilisation d'un latex avec un encollage de produit isolant, notamment thermique et/ou acoustique, à base de laine minérale pour améliorer la résistance mécanique après vieillissement, en particulier en milieu humide, du produit.

D'autres caractéristiques et avantages de l'invention apparaîtront de la description des exemples détaillés qui va suivre.

### EXEMPLE 1

On fabrique de la laine de verre par la technique de la centrifugation interne, dans laquelle la composition de verre fondu est transformée en filaments au moyen d'un outil dénommé assiette de centrifugation, comprenant un panier formant chambre de réception de la composition fondue et une bande périphérique percée d'une multitude d'orifices : l'assiette étant mue en rotation autour de son axe de symétrie disposé verticalement, la composition est éjectée à travers les orifices sous l'effet de la force de centrifuge et la matière s'échappant des orifices est étirée en filaments avec l'assistance d'un courant de gaz d'étirage.

De façon classique, une couronne de pulvérisation d'encollage est disposée au-dessous des assiettes de fibrage de façon à répartir régulièrement la composition d'encollage sur la laine de verre qui vient d'être formée.

La laine minérale ainsi encollée est collectée sur un convoyeur à bande équipé de caissons d'aspiration internes qui permettent de retenir la laine minérale sous forme d'un feutre ou d'une nappe à la surface du convoyeur. Le convoyeur circule ensuite dans une étuve où a lieu la polycondensation de la résine de l'encollage.

Par rapport à cette technique de fabrication classique, pour le besoin de cet exemple, on a monté une deuxième couronne de pulvérisation juste au-dessus de la couronne d'encollage de façon à projeter sur la laine une composition de latex qui viendra s'ajouter à l'encollage sur les filaments minéraux.

La composition du verre (ci-après désigné V1) est du type décrit dans EP-A-0 412 878.

ll s'agit d'un verre dit biosoluble, c'est-à-dire susceptible de se dissoudre dans un milieu physiologique. Ce type de verre est tout particulièrement sensible à l'exposition à l'eau atmosphérique ou liquide pendant une durée prolongée, l'attaque hydrolytique du verre pouvant dégrader les fibres de verre avec une perte potentielle de propriétés mécaniques.

La composition de l'encollage est la suivante (en parties en poids) :
- résine formo-phénolique **R1** 55 parties en poids de solides (38% en poids d'extrait sec
   phénol libre < 1,2%, formol libre < 7%)
- urée 45 parties en poids
- huile minérale
- sulfate d'ammonium 3 parties en poids
- ammoniaque 6 parties en poids
   (sur la base de NH₃)
- silane 0 à 1 parties en poids

L'encollage est dilué avec de l'eau avant d'être pulvérisé, le taux de dilution et le débit de pulvérisation étant adaptés pour déposer de l'ordre de 7 à 15 %, généralement de l'ordre de 7 à 10 %, de matière sèche par rapport au poids de laine de verre.

Le latex pulvérisé au-dessus de l'encollage est dans le cas de cet exemple de type vinylique. Il est commercialisé par la firme Wacker sous la marque VINNOL et consiste en une dispersion aqueuse d'un terpolymère chlorure de vinyle/laurate de vinyle/éthylène stabilisé par un colloïde protecteur d'alcool polyvinylique. Le polymère a une température minimale de filmification de l'ordre de 2°C, sa température de transition vitreuse est légèrement supérieure. La dispersion aqueuse a un extrait sec d'environ 50% et présente un pH de l'ordre de 4.

Un essai de référence a été réalisé sans pulvérisation de latex, et deux essais selon l'invention ont été réalisés avec une quantité de latex pulvérisée correspondant respectivement à 1 et 2 % de matière sèche par rapport au poids de verre. Pour l'ensemble de ces essais, ainsi que ceux des exemples suivants, il a été tenu compte de la quantité d'eau apportée par le latex pour adapter la dilution de l'encollage de telle sorte que, avec ou sans latex, la laine de verre reçoit la même quantité d'eau.

Le produit isolant fabriqué dans cet exemple est un panneau d'une densité de l'ordre de 80 kg/m³, la pulvérisation du latex n'affectant aucunement l'obtention de la densité désirée.

Les produits obtenus sont soumis aux mesures des grandeurs caractéristiques suivantes :
Reprise d'eau en immersion : cette grandeur caractérise l'aptitude du produit à absorber de l'eau en cas de contact accidentel avec de l'eau liquide (lors du stockage sur un chantier par exemple). indirectement, elle permet de quantifier le degré d'hydrophilie des additifs de la laine de verre.

Elle est mesurée en pratiquant un test d'immersion suivant un protocole proche de celui de la norme ASTM-C 240-72.

Une éprouvette préalablement pesée est immergée horizontalement dans de l'eau à la température ambiante pendant 2 heures, avec une hauteur d'eau de 30 mm au-dessus du niveau de la face supérieur de l'éprouvette. Elle est ensuite disposée verticalement sur un bord pour permettre son égouttage pendant un temps de 15 minutes, au bout duquel on la pèse.

On exprime les résultats par la masse d'eau en kg absorbée par m³ de volume de matériau.
Friabilité : cette grandeur caractérise la perte d'intégrité de la laine minérale lorsque le produit est manipulé. Dans le cadre de la présente invention, elle est mesurée principalement pour donner une indication sur le caractère effectif du dépôt du latex sur les filaments minéraux : une réduction de la friabilité est le signe que le latex a formé sur au moins une partie des filaments un revêtement protecteur susceptible, en cas de rupture du filament, de constituer une sorte de gaine retenant le verre dans le produit isolant.

Elle est mesurée de la façon suivante : des éprouvettes sont prélevées dans le produit sous forme de carottes de 25mm de diamètre refendues en tranches d'environ 3mm. On pèse 3 grammes de ce prélèvement, que l'on place nsuite dans un tamis à mailles de 1 mm avec 4 billes en caoutchouc. Le tamisage est réalisé avec une amplitude d'agitation de 2,5 mm pendant 3 minutes.

On pèse alors le matériau restant dans le tamis. Les résultats sont exprimés par le pourcentage en poids de matière ayant passé les mailles du tamis par rapport au poids initial.
Résistance au poinçonnement (en Newton), Résistance à l'arrachement (en kPa) et Résistance à la compression (en kPa, pour une réduction d'épaisseur de 10% et de 25%) sont également mesurées de façon classique.

Ces caractéristiques sont mesurées immédiatement après fabrication et après un vieillissement accéléré (NORDTEST) pendant 7 jours (168 heures) dans une enceinte climatique régulée à une température de 70°C et une humidité relative de 90-95%.

Les résultats figurent dans le Tableau 1 ci-après, qui indique pour chaque essai le pourcentage de perte de propriété mesuré par rapport à l'état initial après fabrication, et pour chaque essai avec latex le pourcentage d'amélioration de la propriété à l'état vieilli, calculé par rapport à la référence sans latex à l'état vieilli également.

Il en ressort que le latex utilisé affecte assez peu la capacité de reprise en eau du produit, montrant un caractère globalement hydrophobe du produit. Lorsque le taux de latex atteint 2% apparaît une tendance hydrophile limitée, montrant le caractère relativement hydrophile du latex, dû notamment aux fonctions hydrophiles de l'alcool polyvinylique.

Le latex semble avoir été très correctement fixé par la laine de verre, puisque cette dernière est rendue moins friable que dans le produit de référence.

Il est étonnant de noter que le latex n'a dans un premier temps pas d'effet significatif sur la friabilité, mais qu'un effet positif apparaît progressivement avec le vieillissement du produit, pour conduire après 7 jours de vieillissement en milieu humide à une perte beaucoup moins importante qu'avec le produit de référence. Le produit selon l'invention est environ deux fois plus intègre à l'état vieilli que le produit de référence.

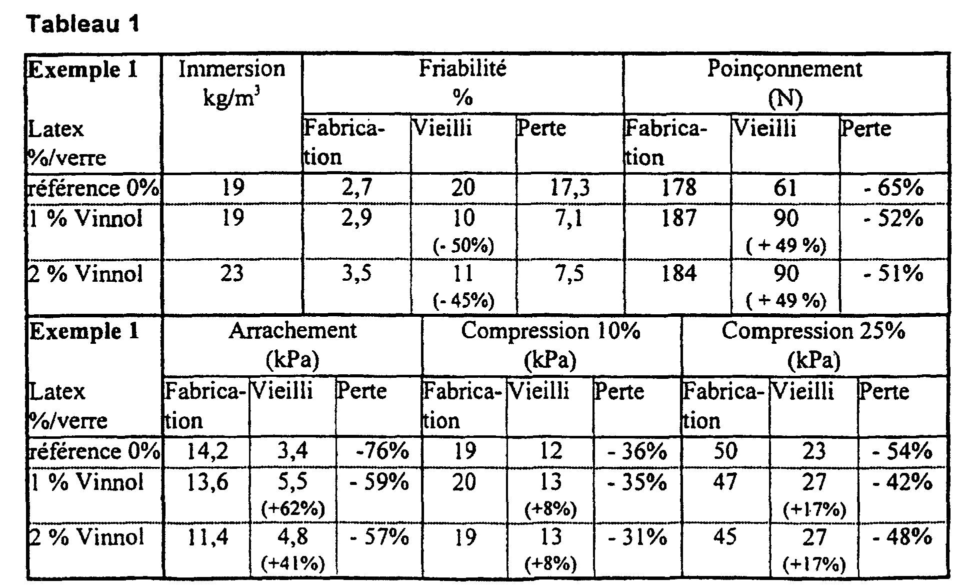

En ce qui concerne les propriétés mécaniques, on peut voir que l'utilisation de latex a permis de réduire de façon sensible les pertes de propriété au cours du vieillissement, ainsi que d'améliorer le niveau après vieillissement de chacune des propriétés étudiées. Les améliorations les plus remarquables concernent la résistance au poinçonnement et à l'arrachement.

Ici encore, il est surprenant de noter que la résistance à l'arrachement et à la compression (10 et 25%) ne sont pas améliorées, et sont même relativement dégradées, dans le produit juste après sa fabrication par rapport au produit de référence. L'incorporation de latex rend par contre le produit beaucoup plus stable dans le temps, en ce sens qu'il subit des pertes de performance bien plus faibles que le produit de référence.

### EXEMPLES 2 et 3

On a validé les observations ci-dessus, en reproduisant l'exemple 1 avec deux autres résines formo-phénoliques **R2** et **R3** présentant des caractéristiques un peu différentes de la résine **R1.**

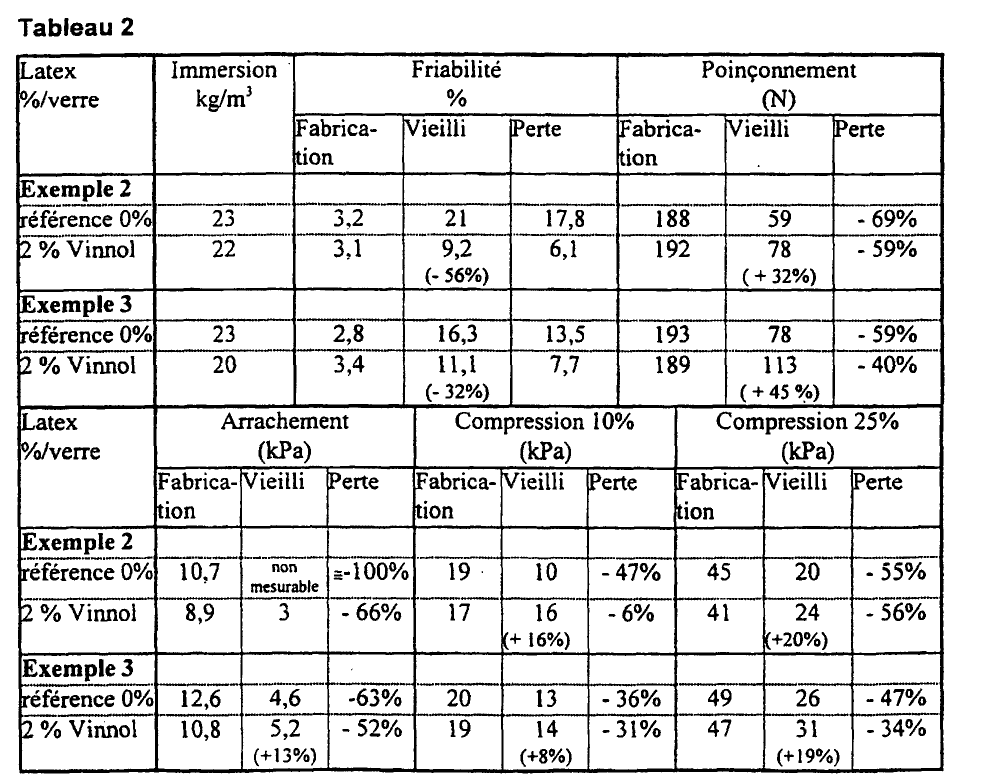

On a, à chaque fois, préparé un produit de référence correspondant sans latex. Les résultats obtenus figurent dans le Tableau 2 ci-après.

On retrouve une amélioration de toutes les propriétés du même ordre de grandeur qu'à l'exemple 1. On remarquera que l'exemple 3 atteint un niveau général de performance très élevé.

### EXEMPLES 4 et 5

Cet exemple illustre la reproduction de l'exemple 1 avec d'autres latex, respectivement :
- Ex 4 : un copolymère acétate de vinyle/ester et acide méthacrylique ayant une température minimale de filmification de l'ordre de 80°C (extrait sec environ 50 % ; pH de l'ordre de 8) ;
- Ex 5 : un homopolymère de polyacétate de vinyle, ayant une température de transition vitreuse d'environ 33°C (extrait sec environ 55 % ; pH de l'ordre de 4 à 5).

Ces deux latex sont base d'un polymère dans lequel chaque monomère est porteur de fonctions hydrophiles. Comme il ressort du **Tableau 3** ci-après, l'homopolymère de polyacétate de vinyle est très hydrophile, ce qui entraîne une forte absorption d'eau par le produit isolant. L'ajout supplémentaire d'une silicone en tant qu'agent hydrofugeant, à un taux très faible de l'ordre de 0,2%, permet de ramener l'absorption à un niveau acceptable en conservant la même amélioration des propriétés mécaniques. On peut substituer la silicone par un agent hydrofugeant du type fluoré pour réduire l'absorption d'eau en gardant le même niveau avantageux de propriétés mécaniques.

On constate que le latex hydrophile de l'exemple 4 a une influence très favorable sur la résistance au poinçonnement et à l'arrachement, et une influence plus faible sur la résistance à la compression. Le latex très hydrophile de l'exemple 5 révèle une capacité excellente à améliorer toutes les propriétés étudiées après vieillissement alors que le comportement juste après fabrication n'est pas amélioré.

### EXEMPLE 6

On fabrique un autre produit isolant de la façon indiquée à l'exemple 1 avec ajout de 2% de latex, mais avec un autre verre (ci-après désigné V6) du type décrit dans WO-A-95 32 927.

Avec cet autre verre, l'ajout de latex permet de réduire le pourcentage de perte de chacune des propriétés étudiées. On remarque en particulier une amélioration remarquable de la résistance au poinçonnement après vieillissement, qui est même doublée par rapport à la résistance de la référence sans latex.

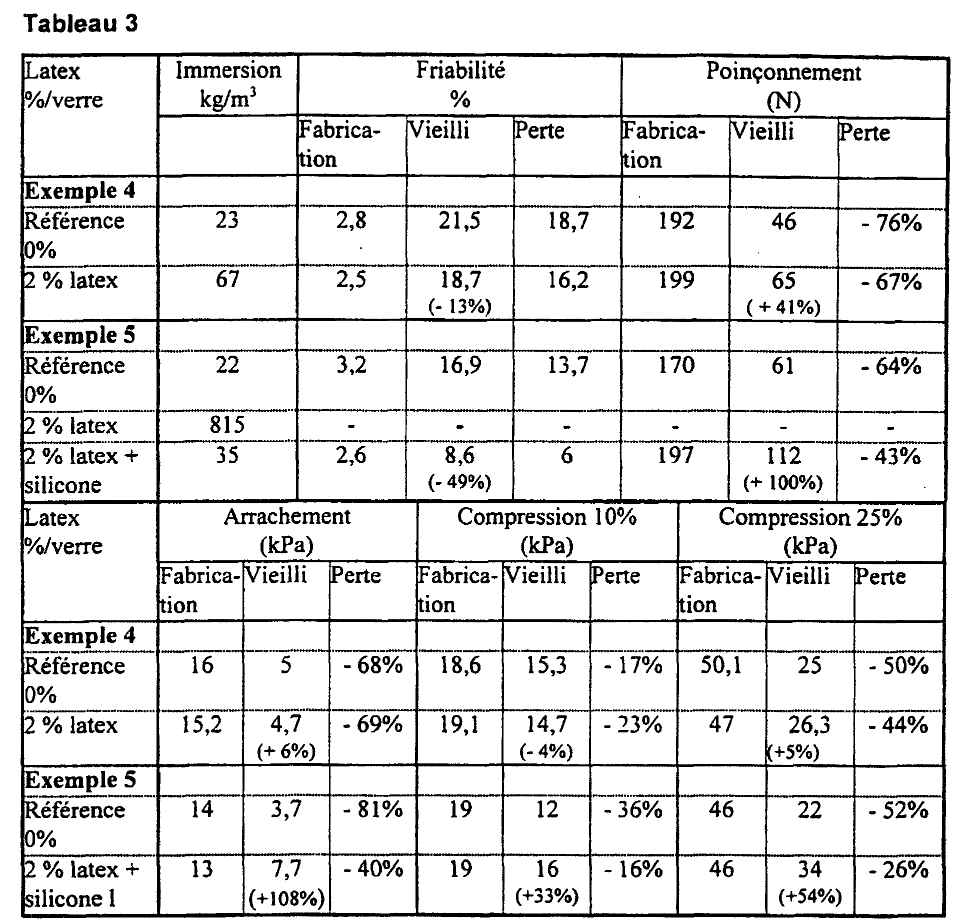

### EXEMPLE 7

On fabrique un autre produit isolant de la façon indiquée à l'exemple 6, mais avec le latex homopolymère de polyacétate de vinyle utilisé à l'exemple 4, en ajoutant 1,5% de latex par rapport au poids de laine de verre avec 0,2% de silicone par rapport au poids de laine de verre.

Ce latex hydrophile permet une réduction du pourcentage de perte de propriété plus marquée que dans l'exemple 6. Le niveau de chacune des propriétés mécaniques est en outre relevé de manière considérable, avec en particulier une amélioration de 250% de la résistance au poinçonnement et une amélioration de plus de 90% de la résistance à l'arrachement.

### EXEMPLE 8

On fabrique un autre produit isolant de densité plus faible de l'ordre de 50 kg/m³ dans des conditions autrement identiques à celles de l'exemple 2 (verre V1, résine R2, 2% de latex Vinnol).

Dans le cas de ce produit relativement léger, la résistance mécanique est très nettement améliorée par rapport à la référence.

### EXEMPLES 9 et 10

On fabrique d'autres produits isolants de densité de l'ordre de 50 kg/m³ avec le verre V6 dans des conditions similaires à celles de l'exemple 6, adaptées pour modifier la densité du produit, l'ajout de latex Vinnol n'étant que de 1%.

Dans l'exemple 9 , on utilise la résine R2 avec des proportions résine/urée dans un rapport 55/45, et l'ajout de latex est réalisé en pulvérisation supérieure.

Le niveau général de résistance mécanique est relevé de manière importante par rapport au produit de référence.

Dans l'exemple 10, on utilise la résine R1, toujours avec des proportions résine/urée dans un rapport 55/45, le latex étant mis en mélange dans l'encollage, le tout étant appliqué sur la laine de verre avec une seule couronne de pulvérisation.

Ces nouvelles conditions d'application du latex sont également favorables à l'amélioration de la résistance mécanique après vieillissement.

Les résultats obtenus pour les produits des exemples 6 à 10 sont présentés dans le Tableau 5 ci-après.

### EXEMPLES 11 et 12

On fabrique comme à l'exemple 3 un produit isolant de densité environ 80 kg/m³, avec la résine R3, en n'ajoutant que 1% de latex à l'encollage par pulvérisation avec une couronne supérieure, et en utilisant encore un autre verre (désigné ci-après V11) du type décrit dans WO-A-95 329 27. On utilise deux nouveaux latex, à savoir :
- Ex 11 : un copolymère styrène/ester acrylique silanisé commercialisé par Wacker sous la référence Vinnapas LL6030 (température de filmification 24°C)
- Ex 12 : un copolymère chlorure de vinyle/éthylène commercialisé par Wacker sous la référence Vinnol CE 752 (température de filmification 7°C). Il s'agit d'un latex hydrophobe.

Soumis aux même tests que ceux décrits précédemment, ces produits donnent les résultats figurant dans le Tableau 4 ci-après.

L'invention, qui vient d'être décrite dans le cas particulier de produits isolants à base de laine de verre du type susceptible de se dissoudre en milieu physiologique, n'est nullement limitée à ce mode de réalisation. En particulier, le latex peut être utilisé pour améliorer la résistance mécanique après vieillissement de produits à base de verres traditionnels moins sensibles à l'exposition à l'eau, ou même de produits à base d'autre laine minérale telle que la laine de roche. A partir des indications données dans la description générale, l'homme du métier adaptera le choix des matériaux en fonction de ses besoins particuliers.

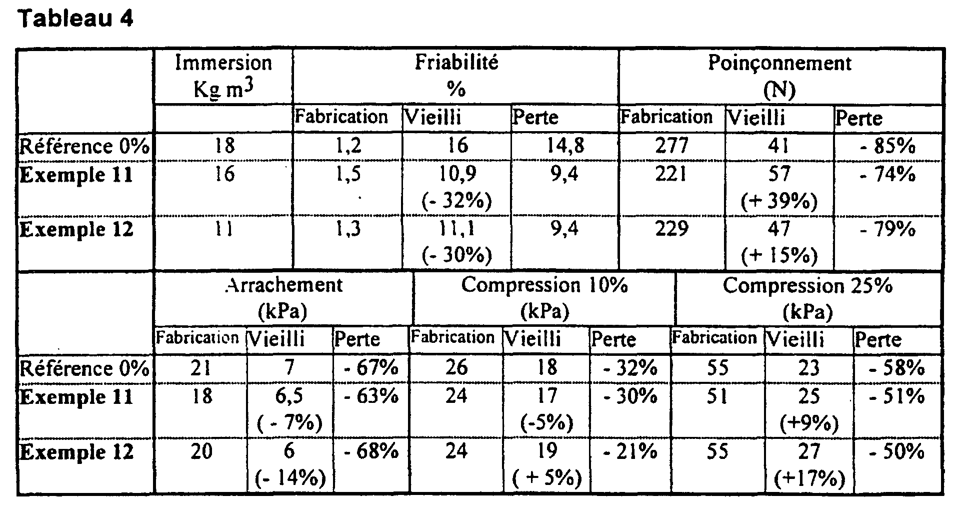

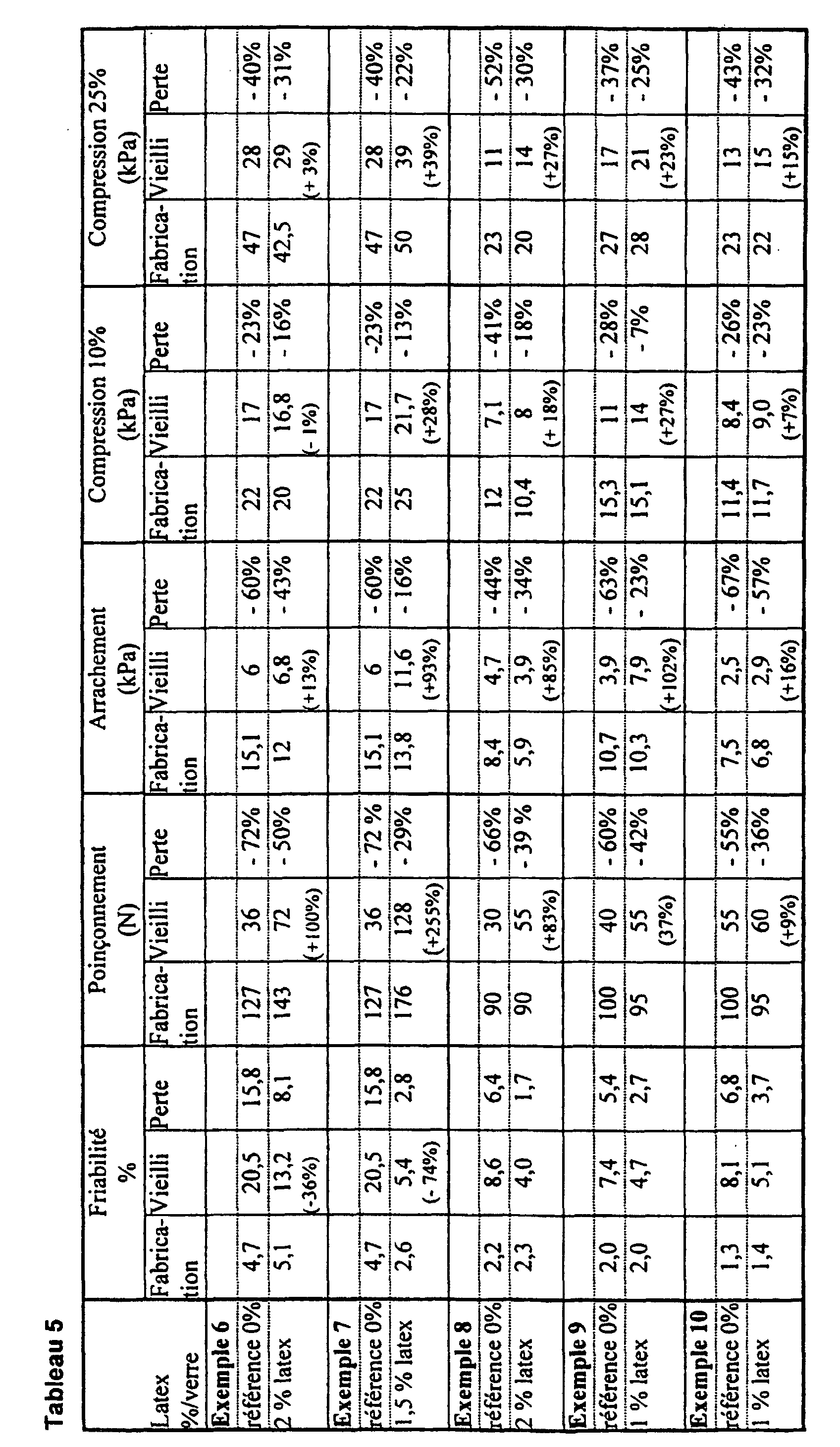

## Revendications

1. Procédé pour améliorer la résistance mécanique après vieillissement, en particulier en milieu humide, d'un produit isolant, notamment thermique et/ou acoustique, à base de laine minérale susceptible de se dissoudre en milieu physiologique, renfermant une proportion d'oxydes alcalins de l'ordre de 8 à 25 % en poids de la laine, et pourvue d'un encollage comprenant une résine thermodurcissable, notamment une résine phénolique,
procédé dans lequel on ajoute un latex à l'encollage lors de la fabrication du produit.

2. Procédé selon la revendication 1, dans lequel le latex est à base d'une émulsion ou dispersion aqueuse d'un polymère porteur de fonctions hydrophiles, notamment hydroxyle, carboxyle ou ester.

3. Procédé selon la revendication 2, dans lequel le polymère est dérivé d'un ou plusieurs monomères chacun porteur d'au moins une fonction hydrophile.

4. Procédé selon la revendication 2 ou 3, dans lequel le latex renferme un polymère ou un copolymère de type vinylique, notamment homo- ou copolymère d'acétate de vinyle, de type acrylique, et/ou dérivé d'acide carboxylique.

5. Procédé selon la revendication 4, dans lequel le latex est choisi parmi :
- un homopolymère de polyacétate de vinyle, un copolymère acétate de vinyle/ester ou acide (méth)acrylique, un copolymère acétate de vinyle/ester maléïque, un copolymère acétate de vinyle/oléfine, un copolymère acétate de vinyle/chlorure de vinyle,
- un copolymère acrylonitrile/ester acrylique, un copolymère styrène/acrylique silanisé.

6. Procédé selon la revendication 1 ou 2, dans lequel le latex est à base d'une émulsion ou dispersion aqueuse de particules constituées d'un polymère entouré de tensioactif ou d'un colloïde protecteur à fonctions hydrophiles, notamment à base d'alcool polyvinylique ou de cellulose.

7. Procédé selon la revendication 6, dans lequel le latex comprend un copolymère chlorure de vinyle/éthylène, un terpolymère chlorure de vinyle/laurate de vinyle/éthylène silanisé ou non.

8. Procédé selon l'une quelconque des revendications 2 à 7, dans lequel on ajoute au latex un agent hydrofugeant, tel que silicone ou composé fluoré.

9. Procédé selon l'une quelconque des revendications précédentes dans lequel le latex est à base de polymère ayant une température de transition vitreuse T_{g} inférieure à 80°C, notamment à 50°C.

10. Procédé selon l'une quelconque des revendications précédentes dans lequel le latex est à base de polymère ayant une température de transition vitreuse T_{g} supérieure à -5°C notamment à 0°C.

11. Procédé selon l'une quelconque des revendications précédentes, dans lequel la part pondérale du latex introduit est inférieure à 5%, notamment de l'ordre de 0,01 à 5% de matière sèche par rapport au poids de laine minérale.

12. Procédé selon l'une quelconque des revendications précédentes, dans lequel on mélange le latex à l'encollage avant application sur la laine minérale.

13. Procédé selon l'une quelconque des revendications 1 à 11, dans lequel on applique le latex séparément de l'encollage sur la laine minérale.

14. Produit d'isolation, notamment thermique et/ou acoustique, à base de laine minérale constituée de laine de verre ou de roche susceptible de se dissoudre en milieu physiologique et renfermant une proportion d'oxydes alcalins de l'ordre de 8 à 25 % en poids de la laine minérale, ladite laine étant pourvue d'un encollage à base de résine thermodurcissable, notamment une résine phénolique, renfermant un latex qui améliore la résistance mécanique du produit après vieillissement, en particulier en milieu humide.

15. Produit d'isolation selon la revendication 14, dans lequel la laine minérale a une vitesse de dissolution en solution saline simulant un milieu physiologique, d'au moins 30, notamment au moins 40 ou 50 ng/cm² par heure, mesurée à pH 4,5, et d'au moins 30, notamment au moins 40 ou 50 ng/cm² par heure, mesurée à pH 7,5.

16. Produit d'isolation selon la revendication 14 ou 15, qui a une densité d'au moins 30 kg/m³, notamment d'au moins 50 kg/m³, en particulier au moins 80 kg/m³.

17. Utilisation d'un latex avec un encollage de produit isolant, notamment thermique et/ou acoustique, à base de laine minérale pour améliorer la résistance mécanique après vieillissement, en particulier en milieu humide, du produit.

18. Utilisation d'un latex selon la revendication 17, en mélange dans l'encollage ou en pulvérisation séparée.

## Claims

1. Process for improving the mechanical strength, after age-hardening, in particular in a damp environment, of an insulating product, in particular a thermal and/or acoustic insulating product, based on mineral wool which is soluble in a physiological medium, which comprises a proportion of alkaline oxides in the order of from 8 to 25% by weight of the wool and which is provided with a sizing agent which comprises a thermosetting resin, in particular a phenol resin,
in which process a latex is added to the sizing agent during the manufacture of the product.

2. Process according to claim 1, wherein the latex is based on an emulsion or aqueous dispersion of a polymer which has hydrophilic functions, in particular hydroxyl, carboxyl or ester.

3. Process according to claim 2, wherein the polymer is derived from one or more monomers which each have at least one hydrophilic function.

4. Process according to claim 2 or 3, wherein the latex comprises a polymer or a copolymer which is of the vinyl type, in particular a homopolymer or copolymer of vinyl acetate, of the acrylic type and/or derived from carboxylic acid.

5. Process according to claim 4, wherein the latex is selected from:
- a homopolymer of polyvinyl acetate, a copolymer of vinyl acetate/ester or (meth)acrylic acid, a copolymer of vinyl acetate/maleic ester, a copolymer of vinyl acetate/olefin, a copolymer of vinyl acetate/vinyl chloride,
- a copolymer of acrylonitrile/acrylic ester, a styrene/silanised acrylic copolymer.

6. Process according to claim 1 or 2, wherein the latex is based on an emulsion or aqueous dispersion of particles which are constituted by a polymer surrounded by surfactant or a protective colloid having hydrophilic functions, in particular based on polyvinyl alcohol or cellulose.

7. Process according to claim 6, wherein the latex comprises a copolymer of vinyl chloride/ethylene, a terpolymer of vinyl chloride/vinyl laurate/silanised ethylene or non-silanised ethylene.

8. Process according to any one of claims 2 to 7, wherein a hydrophobic agent, such as silicone or a fluorous compound, is added to the latex.

9. Process according to any one of the preceding claims, wherein the latex is based on a polymer having a vitreous transition temperature T_{g} of less than 80°C, in particular less than 50°C.

10. Process according to any one of the preceding claims, wherein the latex is based on a polymer having a vitreous transition temperature T_{g} of greater than -5°C, in particular greater than 0°C.

11. Process according to any one of the preceding claims, wherein the proportion by weight of the latex introduced is less than 5%, in particular in the order of from 0.01 to 5% of dry material relative to the weight of mineral wool.

12. Process according to any one of the preceding claims, wherein the latex is admixed with the sizing agent before being applied to the mineral wool.

13. Process according to any one of claims 1 to 11, wherein the latex is applied to the mineral wool separately from the sizing agent.

14. Insulating product, in particular thermal and/or acoustic insulating product, based on mineral wool which is constituted by glass wool or rock wool which is soluble in a physiological medium and which comprises a proportion of alkaline oxides in the order of from 8 to 25% by weight of the mineral wool, the wool being provided with a sizing agent based on a thermosetting resin, in particular a phenol resin, which comprises a latex which improves the mechanical strength of the product after age-hardening, in particular in a damp environment.

15. Insulating product according to claim 14, wherein the mineral wool has a dissolution rate, in a saline solution which simulates a physiological medium, of at least 30, in particular at least 40 or 50 ng/cm² per hour, measured at pH 4.5, and of at least 30, in particular at least 40 or 50 ng/cm² per hour, measured at pH 7.5.

16. Insulating product according to claim 14 or 15, which has a density of at least 30 kg/m³, in particular at least 50 kg/m³, in particular at least 80 kg/m³.

17. Use of a latex with a sizing agent for an insulating product, in particular a thermal and/or acoustic insulating product, based on mineral wool in order to improve the mechanical strength after age-hardening, in particular in a damp environment, of the product.

18. Use of a latex according to claim 17, in admixture in the sizing agent or as a separate atomised substance.

## Patentansprüche

1. Verfahren zum Verbessern der mechanischen Festigkeit nach Alterung, insbesondere im feuchten Milieu, eines Dämmproduktes, insbesondere eines wärme- und/oder schalldämmenden Produktes auf Basis von im physiologischen Milieu löslicher Mineralwolle, welche einen Anteil von Alkalioxiden in der Größenordnung von 8 bis 25 Gew.-% der Wolle aufweist und mit einer Schlichte versehen ist, welche ein wärmeaushärtbares Harz, insbesondere ein Phenolharz aufweist,
wobei man bei diesem Verfahren im Zuge der Herstellung des Produktes der Schlichte ein Latex zugibt.

2. Verfahren nach Anspruch 1, bei dem das Latex auf einer wäßrigen Emulsion oder Dispersion eines Polymers basiert, welches hydrophile Funktionen, insbesondere Hydroxyl-, Carboxyl- oder Esterfunktionen trägt.

3. Verfahren nach Anspruch 2, bei dem das Polymer von einem oder mehreren Monomeren abgeleitet ist, die jeweils mindestens eine hydrophile Funktion tragen.

4. Verfahren nach Anspruch 2 oder 3, bei dem das Latex ein Polymer oder ein Copolymer vom Vinyltyp, insbesondere Homo- oder Copolymer von Vinylacetat, vom Acryltyp, und/oder Carbonsäurederivat umfaßt.

5. Verfahren nach Anspruch 4, bei dem das Latex ausgewählt ist unter:
- einem Polyvinylacetat-Homopolymer, einem Vinylacetat-Ester- oder (Meth)acrylsäure-Copolymer, einem Vinylacetat-Maleinsäureester-Copolymer, einem Vinylacetat-Olefin-Copolymer, einem Vinylacetat-Vinylchlorid-Copolymer,
- einem Acrylnitril-Acrylsäureester-Copolymer, einem Copolymer von Styrol und silanisiertem Acryl.

6. Verfahren nach Anspruch 1 oder 2, bei dem das Latex auf einer wäßrigen Emulsion oder Dispersion von Partikeln basiert, die aus einem Polymer insbesondere auf Basis von Polyvinylalkohol oder Cellulose bestehen, welches von Tensid oder einem Schutzkolloid mit hydrophilen Funktionen umgeben ist,.

7. Verfahren nach Anspruch 6, bei dem das Latex ein Vinylchlorid-Ethylen-Copolymer, ein Terpolymer von Vinylchlorid, Vinyllaurat und silanisiertem oder nicht silanisiertem Ethylen aufweist.

8. Verfahren nach einem der Ansprüche 2 bis 7, bei dem man dem Latex ein wasserabweisendes Mittel wie Silicon oder eine fluorhaltige Verbindung zugibt.

9. Verfahren nach einem der vorhergehenden Ansprüche, bei dem das Latex auf Polymer mit einer Glasübergangstemperatur T_{g} von weniger als 80°C, insbesondere weniger als 50°C basiert.

10. Verfahren nach einem der vorhergehenden Ansprüche, bei dem das Latex auf Polymer mit einer Glasübergangstemperatur T_{g} von mehr als -5°C, insbesondere mehr als 0°C basiert.

11. Verfahren nach einem der vorhergehenden Ansprüche, bei dem der Gewichtsanteil des eingebrachten Latex weniger als 5%, insbesondere in der Größenordnung von 0,01 bis 5% Trockensubstanz bezogen auf das Gewicht der Mineralwolle beträgt.

12. Verfahren nach einem der vorhergehenden Ansprüche, bei dem das Latex der Schlichte vor dem Aufbringen auf die Mineralwolle beigemischt wird.

13. Verfahren nach einem der Ansprüche 1 bis 11, bei dem das Latex separat von der Schlichte auf die Mineralwolle aufgebracht wird.

14. Dämmprodukt, insbesondere wärme- und/oder schalldämmendes Produkt auf Basis von Mineralwolle, die aus Glas- oder Steinwolle besteht, welche im physiologischen Milieu löslich ist und einen Anteil von Alkalioxiden in der Größenordnung von 8 bis 25 Gew.-% der Mineralwolle aufweist, wobei diese Wolle mit einer Schlichte auf Basis von wärmeaushärtbarem Harz versehen ist, insbesondere einem Phenolharz, welches ein Latex umfaßt, das die mechanische Festigkeit des Produktes nach Alterung insbesondere im feuchten Milieu verbessert.

15. Dämmprodukt nach Anspruch 14, bei dem die Mineralwolle in einer Salzlösung, welche ein physiologisches Milieu simuliert, eine Auflösungsrate von mindestens 30, insbesondere mindestens 40 oder 50 ng/cm² pro Stunde, gemessen bei einem pH-Wert von 4,5, und von mindestens 30, insbesondere mindestens 40 oder 50 ng/cm² pro Stunde, gemessen bei einem pH-Wert von 7,5 besitzt.

16. Dämmprodukt nach Anspruch 14 oder 15, das eine Dichte von mindestens 30 kg/m³, insbesondere mindestens 50 kg/m³, wiederum insbesondere mindestens 80 kg/m³ besitzt.

17. Verwendung eines Latex mit einer Schlichte für ein Dämmprodukt, insbesondere ein wärme- und/oder schalldämmendes Produkt auf Basis von Mineralwolle, zum Verbessern der mechanischen Festigkeit des Produktes nach Alterung, insbesondere im feuchten Milieu.

18. Verwendung eines Latex nach Anspruch 17 in Mischung in der Schlichte oder mit separatem Aufsprühen.
